# EUROPÄISCHE PATENTSCHRIFT

(11) **EP 2 875 084 B1**
(45) Veröffentlichungstag und Bekanntmachung des Hinweises auf die Patenterteilung: **04.09.2019**
(21) Anmeldenummer: 13737289.2
(22) Anmeldetag: 17.07.2013
(51) Int. Cl.: C09D 183/04, B05D 7/24, C08K 3/22, C08K 3/36, C08L 83/04, F24F 3/147

(54) **DISPERSION, VERFAHREN ZUR BESCHICHTUNG VON GEGENSTÄNDEN MIT DIESER DISPERSION UND VERWENDUNG DER DISPERSION**
DISPERSION, METHOD FOR COATING OBJECTS WITH THIS DISPERSION, AND USE OF THE DISPERSION
DISPERSION, PROCÉDÉ DE REVÊTEMENT D'OBJETS AU MOYEN DE CETTE DISPERSION ET UTILISATION DE LA DISPERSION

(30) Priorität: 19.07.2012 DE 102012014335
(43) Veröffentlichungstag der Anmeldung: 27.05.2015
(73) Patentinhaber: Fraunhofer-Gesellschaft zur Förderung der angewandten Forschung e.V., 80686 München (DE)
(72) Erfinder: HENNINGER, Stefan, 79346 Endingen (DE); KUMMER, Harry, 79114 Freiburg (DE); JEREMIAS, Felix, 79110 Freiburg (DE)
(86) Internationale Anmeldenummer: PCT/EP2013/065123
(87) Internationale Veröffentlichungsnummer: WO 2014/012989

(56) Entgegenhaltungen:
- DE-A1-102005 003 543
- DE-A1-102011 011 688
- JP-A- 2001 321 425
- JP-A- 2004 148 274
- JP-A- 2009 091 208
- US-A1- 2009 155 464

## Beschreibung

Die Erfindung betrifft eine Dispersion sowie ein Verfahren zur Beschichtung von Gegenständen, insbesondere Wärmetauscherstrukturen, bei der diese Dispersion auf einer Trägerstruktur aufgetragen und unter Ausbildung einer Schicht vernetzt und/oder verfilmt wird. Ebenso betrifft die Erfindung derart beschichtete Wärmetauscherstrukturen. Die erfindungsgemäßen Dispersionen können ebenso für Beschichtungen im chemischen Anlagenbau sowie in der Medizintechnik eingesetzt werden.

Das Ausnutzen des physikalischen Prozesses der Adsorption von Gasen an mikroporösen Oberflächen und damit der Einsatz in thermisch angetriebenen Wärmepumpen und Kältemaschinen hat verschiedene Vorteile:
- Nutzung von Abwärme bzw. Wärme auf niedrigem Temperaturniveau für Kühlung, damit einhergehend eine energieeffiziente Kühlung oder auch solare Kühlung;
- Entlastung des elektrischen Netzes durch thermisch angetriebene Kältemaschinen,
- primärenergetisch effiziente Heizung und Kühlung, durch den Wärmepumpeneffekt wird Umweltwärme (Niedertemperaturwärme) auf ein nutzbares Niveau angehoben.

Nachteile entstehen durch die bislang noch sehr großen Geräte und der damit verbundenen schlechten Leistungsdichte im Vergleich zu konventionellen mechanischen Systemen.

Momentan gebaute Wärmepumpen oder Adsorptionskälteanlagen haben geringe Leistungsdichten, was in einer sehr großen Bauweise resultiert, um entsprechende Kälte- oder Wärmeleistungen zu erzielen. Wichtige Ansätze um die Bauweise kompakter zu machen und die Leistungsdichte zu erhöhen liegen darin, die Sorptionskammer kleiner zu bauen. Dafür muss eine hohe Oberfläche des Wärmetauschers gewährleistet sein und eine gute Anbindung des Sorptionsmaterials daran.

Adsorptionskältemaschinen und -Wärmepumpen sowie thermische Speicher auf Basis der Adsorption von Gasen an mikroporösen Feststoffen sind aus dem Stand der Technik bekannt, wobei hauptsächlich Wasser sowie auch Silikagele, Zeolithe und Zeolith-ähnliche Materialien als Arbeitsmittel eingesetzt werden. Hierbei werden zumeist Schüttungen oder lose Klebungen eingesetzt.

Zusätzlich kam die Beschichtungstechnologie in den letzten Jahren auf, die sich jedoch häufig durch eine unzureichende Ankopplung sowie durch mangelnde thermische und mechanische Stabilität auszeichnet. Hier sind die möglichen Systeme aus Binder und aktivem Sorptionsmaterial sowie die Trägerstruktur bisher sehr eingeschränkt.

Wird in Sorptionswärmepumpen oder Sorptionskältepumpen das Sorptionsmaterial in Form einer granularen Schüttung oder als Formkörper eingesetzt, limitieren Wärme- und Stofftransport die Leistung der Anlage. Während der Stofftransport durch makroskopische Granulate naturgemäß limitiert ist, wird der Wärmetransport durch die hauptsächlich vorliegenden Punktkontakte eingeschränkt, z.B. kugelförmige Granulate auf einem Trägerblech.

Wird das Sorptionsmaterial dagegen durch einen flächigen Verbund in einer dünnen Schicht auf dem Wärmeüberträger eingesetzt, können der Stofftransport und vor allem der Wärmetransport deutlich verbessert werden.

Aus der DE 10 2008 050 926 A1 ist ein Adsorberelement bekannt, das aus einem Trägermaterial besteht, auf dem mit einem Bindematerial Sorbenspartikel als Adsorberschicht angeordnet sind. Als Bindemittel werden hier kolloidale Bindemittel auf Basis von Siliziumoxid oder Aluminiumoxid eingesetzt. Die US 2009/0155464 A1 offenbart eine Dispersion zur Herstellung einer Membran für die Gastrennung, die keinerlei Bindemittel enthält. Des Weiteren sind aus JP 2009 091208 A, JP 2001 321425 A, DE 10 2005 003543 A1, JP 2004 148274 A und DE 10 2011 011688 A verschiedene Sorbentien bekannt.

Ausgehend hiervon war es Aufgabe der vorliegenden Erfindung eine stabile Dispersion für die Beschichtung von Substraten, insbesondere metallischen und keramischen Substraten, bereitzustellen, die eine einfachere Handhabung bei der Beschichtung erlauben.

Diese Aufgabe wird durch die Dispersion mit den Merkmalen des Anspruchs 1 sowie durch das Verfahren zur Beschichtung von Substraten mit den Merkmalen des Anspruchs 10 sowie die beschichtete Wärmetauscherstruktur mit den Merkmalen des Anspruchs 16 gelöst. Erfindungsgemäße Verwendungen finden sich im Anspruch 17. Die weiteren abhängigen Ansprüche zeigen vorteilhafte Weiterbildungen auf.

Erfindungsgemäß wird eine Dispersion zur Beschichtung von Substraten bereitgestellt, die folgende Komponenten aufweist:
- mindestens ein poröses Sorbens ausgewählt aus der Gruppe bestehend aus Silikagele, Zeolithe und Zeolith-artige Materialien, Aluminophosphate, Silicaaluminophosphate und Metallaluminiumphosphate, metallorganische Gerüstverbindungen (MOFs) und/oder Koordinationspolymere (PCPs), Zeolith-Imidazolat-Netzwerke (ZiFs), Molekularsiebe (MCMs), Aktivkohlen, Kohlenstoffmolekularsiebe, Hexacyanometallate und Mischungen hiervon, wobei das mindestens eine Sorbens Mesoporen mit einem Durchmesser von 2 bis 50 nm aufweist und damit porös ist und eine BET Oberfläche von mind. 300 m²/g aufweist,
- mindestens ein Bindemittel aus der Gruppe der Polyorganosiloxane und
- mindestens ein organisches Lösungsmittel.

Unter Sorbens ist im Rahmen der vorliegenden Erfindung insbesondere ein Adsorbens zu verstehen. Es können aber auch Materialien sein, die zusätzlich eine Absorption zeigen.

Erfindungsgemäß wurde damit eine Dispersion aus einem Binder und einem porösen Feststoff in einem organischen Lösungsmittel bereitgestellt, die überraschenderweise über mindestens 6 h, bevorzugt 12 h, besonders bevorzugt 24 h und insbesondere 48 h stabil ist. Mit der erfindungsgemäßen Dispersion können somit beispielsweise keramische und metallische Substrate mit einem porösen Feststoff beschichtet werden. Die Zubereitung aus Binder, Sorptionsmaterial und organischem Lösungsmittel wird auf das Substrat aufgetragen und durch Verdampfen des organischen Lösungsmittels verfestigt bzw. bei reaktiven Endgruppen zusätzlich vernetzt.

Im Gegensatz zur wässrigen Dispersion weist die erfindungsgemäße Dispersion in einem organischen Lösungsmittel folgende Vorteile auf:
- Der Polysiloxanbinder, bzw. dessen Vorstufe, geht aus der Produktion bereits in Form einer organischen Lösung/Dispersion hervor, die Bereitung einer wässrigen Dispersion und der damit verbundene Aufwand entfallen. Zudem enthält die Lösung keine Dispergierhilfen und weniger weitere Verarbeitungshilfsmittel.
- Zahlreiche Sorptionsmaterialien, z.B. MOFs wie das Kupfer(II)-trimesat "HKUST-1" oder das Zinkterephthalat MOF-5, werden durch Solvothermalsynthese hergestellt und gehen aus dieser in Form einer Dispersion in einem organischen Lösungsmittel hervor. Liegt der Binder ebenfalls in einer organischen Phase vor, kann die Suspension für die Beschichtung direkt durch Vermengen der beiden Komponenten hergestellt werden. Die Aufreinigung des Materials kann deutlich einfacher am beschichteten Wärmetauscher erfolgen, aufwändige und teure Trennschritte (Zentrifugation) können umgangen werden.

- Manche Sorptionsmaterialien reagieren empfindlich gegenüber Wasser. Bei Verwendung organischer Suspensionen konnten erfolgreich Beschichtungen dieser Materialien hergestellt werden. Die Möglichkeit, Beschichtungen auch von wasserempfindlichen Materialien herzustellen, eröffnet zahlreiche weitere Anwendungsmöglichkeiten etwa im Bereich der Sensorik oder heterogenen Katalyse. Bei geschickter Prozessführung ist auch die offene Handhabung besonders empfindlicher, sogar schutzgaspflichtiger Substanzen in Form einer organischen Dispersion denkbar.
- Durch die Wahl des organischen Lösungsmittels kann die Abdampfrate sehr gut kontrolliert werden, was einen effizienteren Trockenprozess ermöglicht.
- Organische Lösungsmittel weisen meist eine niedrigere Oberflächenspannung auf, wodurch sich die Benetzung gegenüber dem Untergrund und dem Adsorptionsmaterial verbessert und man so eine bessere Verteilung des Binders auf den Oberflächen erhält. Flüssigkeiten mit niedrigen Oberflächenspannungen weisen zudem homogenere Oberflächen nach dem Trocknen auf.
- Suspensionen von Sorptionsmaterialien in organischen Flüssigkeiten zeigen sich deutlich stabiler hinsichtlich Entmischung und Sedimentation, was die großtechnische Durchführung wesentlich vereinfacht.
- Durch Variation der Molekülgröße bei verschiedenen Lösungsmitteln kann gezielt gesteuert werden, ob das Lösungsmittel in die Poren des Adsorptionsmaterials eindringt. Dadurch kann beispielsweise gezielt verhindert werden, dass ein gelöster Binder überhaupt in die Poren eindringt und dies so nicht mehr verkleben bzw. blockieren kann.
- Aufgrund der niedrigen Dampfdrücke von vielen Lösungsmitteln kann ein Trocknen bei hohen Temperaturen überflüssig werden. So erfordert der Trocknungsprozess keinen weiteren Energieeinsatz mehr.

Gegenüber wässrigen Dispersionen weist die erfindungsgemäße Dispersion zusätzlich den Vorteil auf, dass durch die Wahl eines geeigneten organischen Lösungsmittels mit niedrigem Siedepunkt im Vergleich zu Wasser die Abdampfrate und damit der Trockenprozess bei der Beschichtung deutlich beschleunigt werden kann.

Die erfindungsgemäße Dispersion weist dabei hinsichtlich der Beschichtung die zusätzlichen Vorteile auf, dass hiermit mechanisch und thermisch hochbelastbare Oberflächen erzeugt werden können, die einen guten Wärme- und Stofftransport ermöglichen, wobei der verfahrenstechnische und apparative Aufwand bei der Beschichtung kleingehalten werden kann.

Vorzugsweise ist das mindestens eine Sorbens wasserempfindlich. Hierzu zählen beispielsweise MOF-5 oder HKUST-1. Es existieren aber auch wasserempfindliche Aktivkohlen oder mesoporöse Molekularsiebe (MCM).

Das mindestens eine Sorbens liegt vorzugsweise als Pulver vor, insbesondere mit einer mittleren Kristallitgröße von 50 nm bis 20 µm und insbesondere mit einer mittleren Korngröße von 200 nm bis 200 µm.

Es ist weiter bevorzugt, dass das mindestens eine Bindemittel ausgewählt aus der Gruppe bestehend aus aliphatischen, olefinischen und aromatischen Mono-, Di- und Triorganosiloxanen, die über einen Vernetzer, insbesondere Silane, Silikate wie Natronwasserglas oder Kieselsäuren , vernetzt sein können. Besonders eignen sich hierfür aliphatische und/oder aromatische Diorganosiloxane wie beispielsweise Methyl-Silikonharze oder Phenyl-Silikonharze oder Kombinationen hieraus. Diese können als Monomere gelöst vorliegen oder bereits polymerisiert sein. Ein Vernetzer kann zugesetzt werden, um die Festigkeit und die Flexibilität zu variieren. Dieser kann als Zusatz eingebracht werden, wie beispielsweise tri- oder tertiäre Silane (beispielsweise Octyltriethoxysilan oder beta-(3,4-Epoxycyclohexyl)ethyltriethoxysilan) oder bereits als aktive Endgruppe der Polymerisate enthalten sein.

Vorzugsweise ist das mindestens eine Lösungsmittel ausgewählt aus der Gruppe bestehend aus Kohlenwasserstoffen, insbesondere aliphatische und aromatische Kohlenwasserstoffe, bevorzugt Benzol und alkylsubstituierte Benzolderivate, wie Toluol, Xylole oder Ethylbenzol, oder aus der Gruppe bestehend aus aliphatischen oder aromatischen Alkoholen, Estern, Ketonen wie Methanol, 2-Methylpropan-1-ol oder 2-Methoxy-1-methylethylacetat.

Es ist weiterhin bevorzugt, dass in der Dispersion zusätzlich Stabilisatoren, Emulgatoren, niedermolekulare funktionelle Zusätze zur Verbesserung der Verarbeitbarkeit beispielsweise organische und anorganische rheologische Additive, insbesondere Polyurethanharze oder pyrogene Kieselsäure, die Wärmeleitfähigkeit erhöhende Komponenten, insbesondere Graphit, Blähgraphit, Kohlenstofffasern, Kohlenstoffröhren, Glasfasern, metallische Nanopartikel sowie Mischungen hiervon enthalten sind.

Eine weitere bevorzugte Variante sieht vor, dass die Suspension, bezogen auf die Trockenmasse ohne Lösungsmittelanteil, folgende Zusammensetzung aufweist:
60% bis 99 Gew.-%, insbesondere von 80 bis 95 Gew.-% des Sorbens,
1 bis 40 Gew.-%, insbesondere von 5 bis 15 Gew.-% des Bindemittels,
0 bis 10 Gew.-% Zusatzstoffe ausgewählt aus der Gruppe der Stabilisatoren, Emulgatoren, niedermolekularen funktionellen Zusätzen zur Verbesserung der Verarbeitbarkeit sowie Mischungen hiervon.

Die erfindungsgemäßen Suspensionen weisen eine überraschend gute Stabilität auf, die eine Beschichtung mit der Dispersion in einem Zeitraum von mindestens 6 h, bevorzugt 12 h, besonders bevorzugt 24 h und insbesondere 48 h ermöglicht.

Erfindungsgemäß wird ebenso ein Verfahren zur Beschichtung von Substraten, insbesondere von Wärmetauscherstrukturen bereitgestellt, bei dem
a) die Dispersion nach einem der vorhergehenden Ansprüche auf dem Substrat gebildet oder nach Herstellung auf dem Substrat aufgetragen wird,
b) eine Filmbildung und/oder Vernetzung unter Ausbildung einer Schicht bei Temperaturen von 0°C bis 300°C, insbesondere bei Temperaturen von 50 bis 250 °C, erfolgt.

Hierbei kann zuerst eine Verfilmung an der Oberfläche stattfinden und das Material anschließend durchtrocknen. Durch Einbringen aktiver Endgruppen oder/und Vernetzermolekülen lässt sich während des Trocknungsprozesses zusätzliche eine molekulare Vernetzung des Binders realisieren.

Vorzugsweise können die Filmbildung und/oder -vernetzung durch Anlegen eines Vakuums oder durch Erhitzen beschleunigt werden.

Es ist weiter bevorzugt, dass die Dispersion auf dem Substrat gebildet wird, indem zunächst das Bindemittel auf dem Substrat aufgebracht und anschließend das Sorbens in trockener oder befeuchteter Form geschüttet und anschließend getrocknet wird.

Hierbei kann eine Handhabung der Materialien unter wasserfreier oder sogar Inertgasatmosphäre notwendig sein.

Die Auftragung der Dispersion im Schritt b) erfolgt vorzugsweise mittels manueller Auftragung, Tauchbeschichtung, Sprühbeschichtung, Rotationsbeschichtung oder verschiedenen Rakelverfahren.

Es ist weiter bevorzugt, dass die Beschichtung mit einer Schichtdicke im Bereich von 100 nm bis 10 mm, insbesondere von 100 µm bis 1 mm erzeugt wird.

Eine weitere bevorzugte Ausführungsform sieht vor, dass das Substrat aus einem Metall oder einer Metalllegierung, insbesondere Aluminium und seinen Legierungen, Kupfer und seinen Legierungen oder rostfreiem Stahl, einem Glas, einem Polymer, einer Keramik oder Kombinationen von diesen besteht oder diese im Wesentlichen enthält.

Erfindungsgemäß werden ebenso beschichtete Wärmetauscherstrukturen, die nach dem zuvor beschriebenen Verfahren herstellbar sind, bereitgestellt.

Verwendung finden die erfindungsgemäßen Dispersionen zur Herstellung von
- Sorptionsschichten für Sorptionsprozesse mit Kältemitteln, insbesondere in Wärmepumpen, Kältemaschinen sowie zur Entfeuchtung und sorptionsgestützten Klimatisierung.
- Sorptionsschichten für Sorptionsprozesse zur thermischen Speicherung.
- Schutzschichten und Sterilschichten in der Medizintechnik,
- sensorisch oder katalytisch aktive Schichten, insbesondere für Gasphasen-Festbettreaktionen,
- Sorptionsschichten für die Gastrennung und Gasspeicherung.

Unter Sterilschichten sind hier sterile Beschichtungen z.B. von Operationsbesteck zu verstehen. Da das Sorbens aufgrund der Wasseraufnahmefähigkeit, den Wassergehalt an der Oberfläche solcher Schichten minimal hält, kann aufgrund dieser trockenen Bedingungen die Bildung von Keimen, deren Bildung nur in einem wässrigen Milieu möglich ist, hervorragend unterdrückt werden.

Anhand der nachfolgenden Beispiele soll der erfindungsgemäße Gegenstand näher erläutert werden, ohne diesen auf die hier gezeigten spezifischen Ausführungsformen einschränken zu wollen.

### Beispiel 1

### Beschichtung eines Aluminium-Bleches mit einer Xylolhaltigen Suspension aus einem wasserempfindlichen Adsorptionsmaterial und einem Polyorgano-siloxan als Binder

Die Aluminium-Bleche (Legierung AIMg3) wurden mit Isopropanol gewaschen und getrocknet. Anschließend wurden die Bleche für 60 s in frisch angesetzter 2molarer NaOH-Lsg. angeätzt. Anschließend in Wasser getaucht und unter fließendem dest. Wasser abgewaschen, mit einem Papiertuch getrocknet und gewogen.

1,9290 g Adsorptionsmaterial (HKUST-1, Basolite®-C300, BASF) wurden auf 6,9213 g mit Xylol (Isomerengemisch, techn.) aufgefüllt. Anschließend wurde die Suspension für 5 min. im Ultraschall-Bad behandelt. Kurz vor dem Verarbeiten wurden unter konstantem Rühren 0,9492 g einer Phenylmethylsilikonharz-Lösung (55 Gew.% in Xylol) (Silikophen® P50/300, Evonik Industries) zur Suspension zugegeben.. Mit einer Pasteurpipette wurden zwischen 0,8 und 1,5 ml der Dispersion auf die Probenbleche aufgetragen.

Die beschichteten Bleche wurden auf einer Heizplatte auf 55°C erwärmt und damit getrocknet. Anschließend wurden alle Proben für die Dauer von 5h auf 200°C erwärmt..

Der Zusatz eines Subratnetzadditives, beispielsweise 0,032 g Tego® Twin 4100, kann die Homogenität der Schicht verbessern.

### Beispiel 2

### Beschichtung eines Aluminium-Bleches mit einer lösungsmittehaltigen Dispersion aus einem Adsorptionsmaterial und einem Polyorganosiloxan als Binder

Die Aluminium-Bleche (Legierung AIMg3) wurden mechanisch-abrasiv vorbehandelt, mit dest. H₂O und Isopropanol gewaschen und getrocknet. Anschließend wurden die Bleche für 60 s in Natronlauge (150 g NaOH/I) bei 65°C angeätzt. Danach in Wasser getaucht und unter fließendem dest. Wasser abgewaschen, mit einem Papiertuch getrocknet und gewogen.

1,9699 g Adsorptionsmaterial (Aktivkohle, CarboTech A35/1) wurden auf 6,9528 g mit Xylol (Isomerengemisch, techn.) aufgefüllt. Anschließend wurde die Feststoffdispersion 5 min im Ultraschall-Bad behandelt. Kurz vor dem Verarbeiten wurden unter Rühren 0,6457 g einer Phenylmethylsilikonharz-Lösung (55 Gew.% in Xylol) (Silikophen P50/300, Evonik) zur Dispersion zugegeben. Mit einer Pasteurpipette wurden 0,8-1,5 ml der Dispersion auf die Probenbleche aufgetragen.

Die beschichteten Bleche wurden auf einer Heizplatte auf 60°C erwärmt und dadurch getrocknet. Anschließend wurden alle Proben nochmals bei 250°C auf der Heiplatte für 45 min erhitzt.

### Variante:

Anstelle von Xylol als Lösungsmittel kann auch Methanol verwendet werden. Hierzu wurden 1,9778 g Adsorptionsmaterial (Aktivkohle, CarboTech A35/1) auf 6,6042 g mit Methanol aufgefüllt. Anschließend wurde die Feststoffdispersion 5 min im Ultraschall-Bad behandelt. Kurz vor dem Verarbeiten wurden unter Rühren 0,6434 g einer Phenylmethylsilikonharz-Lösung (55 Gew.% in Xylol) (Silikophen P50/300, Evonik) zur Dispersion zugegeben.

Nimmt man Wasser als Grundlage für die Dispersion und ersetzt das in Xylol gelöste Phenylmethylsilikonharz durch ein wässriges System (beispielsweise SILRES® MP50, Wacker) agglomeriert die Dispersion nach Zugabe des Silikonharzes sofort. Hier ist keine Verarbeitung durch Auftragen mehr möglich.

### Beispiel 3

### Beschichtung eines Aluminium-Bleches mit einer xylolhaltigen Dispersion aus einem zeolithartigen hydrophilen Adsorptionsmaterial und einem Polyorgano-siloxan als Binder

Die Aluminium-Bleche (AIMg3 Legierung) wurden vorher mechanisch-abrasiv vorbehandelt und mit dest. H₂O gewaschen. Danach mit Isopropanol gewaschen und getrocknet. Anschließend wurden die Bleche für 60 s in NaOH (150 g/l) bei 65°C angeätzt, in Wasser getaucht und unter fließendem dest. Wasser abgewaschen, mit einem Papiertuch getrocknet und gewogen.

1,9699 g eines stark hydrophilen Adsorptionsmaterial (Y-Zeolith, CBV100, Zeolyst) wurden auf 10,194 g mit Xylol (techn.) aufgefüllt. Anschließend wurde die Feststoffdispersion 5 min im Ultraschall-Bad behandelt. Kurz vor dem Verarbeiten wurden 0,4288 g einer Phenylmethylsilikonharz-Lösung (55 Gew.% in Xylol) (Silikophen® P50/300, Evonik Industries) zur Dispersion zugegeben und nochmals mit dem Magnetrührer gerührt. Mit einer Glaspipette wurden 1,5 ml der Dispersion auf die Probenbleche aufgetragen.

Die beschichteten Bleche wurden auf einer Heizplatte auf 60°C erwärmt und getrocknet. Anschließend wurden alle Proben nochmals bei 250°C auf der Heiplatte für 45 min erhitzt.

## Patentansprüche

1. Dispersion enthaltend
- mindestens ein poröses Sorbens ausgewählt aus der Gruppe bestehend aus
Silikagele, Zeolithe und Zeolith-artige Materialien, Aluminophosphate, Silicaaluminophosphate und Metallaluminiumphosphate, metallorganische Gerüstverbindungen (MOFs) und/oder poröse Koordinationspolymere (PCPs), Zeolith-Imidazolat-Netzwerke (ZiFs), mesoporöse Molekularsiebe (MCMs), Aktivkohlen, Kohlenstoffmolekularsiebe, Hexacyanometallate und Mischungen hiervon,
wobei das mindestens eine Sorbens Mesoporen mit einem Durchmesser von 2 bis 50 nm aufweist und damit porös ist und eine BET Oberfläche von mind. 300 m²/g aufweist,
- mindestens ein Bindemittel aus der Gruppe der Polyorganosiloxane und
- mindestens ein organisches Lösungsmittel.

2. Dispersion nach Anspruch 1,
**dadurch gekennzeichnet, dass** das mindestens eine Sorbens eine BET Oberfläche von 300 bis 5000 m²/g aufweist.

3. Dispersion nach einem der vorhergehenden Ansprüche,
**dadurch gekennzeichnet, dass** das mindestens eine Sorbens wasserempfindlich ist, insbesondere Kupfer(II)-trimesat (HKUST-1) oder Zinkterephthalat (MOF-5).

4. Dispersion nach einem der vorhergehenden Ansprüche,
**dadurch gekennzeichnet, dass** das mindestens eine Sorbens als Pulver, insbesondere mit einer mittleren Kristallitgröße von 50 nm bis 20 µm und insbesondere mit einer mittleren Korngröße von 200 nm bis 200 µm, vorliegt.

5. Dispersion nach einem der vorhergehenden Ansprüche,
**dadurch gekennzeichnet, dass** das mindestens eine Bindemittel ausgewählt ist aus der Gruppe bestehend aus aliphatischen, olefinischen und aromatischen Mono-, Di- und Triorganosiloxanen, die über einen Vernetzer, insbesondere Silane, Silikate wie Natronwasserglas oder Kieselsäuren , vernetzt sind.

6. Dispersion nach einem der vorhergehenden Ansprüche,
**dadurch gekennzeichnet, dass** das mindestens eine Lösungsmittel ausgewählt ist aus der Gruppe bestehend aus Kohlenwasserstoffen, insbesondere aliphatische und aromatische Kohlenwasserstoffe, bevorzugt Benzol und alkylsubstituierte Benzolderivate, wie Toluol, Xylole oder Ethylbenzol, oder aus der Gruppe bestehend aus aliphatischen oder aromatischen Alkoholen, Estern, Ketonen wie Methanol, 2-Methylpropan-1-ol oder 2-Methoxy-1-methylethylacetat, sowie Mischungen von den genannten Lösungsmitteln.

7. Dispersion nach einem der vorhergehenden Ansprüche,
**dadurch gekennzeichnet, dass** zusätzlich Stabilisatoren, Emulgatoren, niedermolekulare funktionelle Zusätze zur Verbesserung der Verarbeitbarkeit beispielsweise organische und anorganische rheologische Additive, insbesondere Polyurethanharze oder pyrogene Kieselsäure, die Wärmeleitfähigkeit erhöhende Komponenten, insbesondere Graphit, Blähgraphit, Kohlenstofffasern, Kohlenstoffröhren, Glasfasern, metallische Nanopartikel sowie Mischungen hiervon enthalten sind.

8. Dispersion nach einem der vorhergehenden Ansprüche,
**dadurch gekennzeichnet, dass** die Suspension, bezogen auf die Trockenmasse ohne Lösungsmittelanteil, folgende Zusammensetzung aufweist:
60% bis 99 Gew.-%, insbesondere von 80 bis 95 Gew.-% des Sorbens,
1 bis 40 Gew.-%, insbesondere von 5 bis 15 Gew.-% des Bindemittels,
0 bis 10 Gew.-% Zusatzstoffen ausgewählt aus der Gruppe der Stabilisatoren, Emulgatoren, niedermolekularen funktionellen Zusätzen zur Verbesserung der Verarbeitbarkeit sowie Mischungen hiervon.

9. Dispersion nach einem der vorhergehenden Ansprüche,
**dadurch gekennzeichnet, dass** die Suspension über einen Zeitraum von mindestens 2 Stunden bis zu mindestens 48 Stunden stabil ist.

10. Verfahren zur Beschichtung von Substraten, insbesondere einer Wärmetauscherstruktur, bei dem
a) die Dispersion nach einem der vorhergehenden Ansprüche auf dem Substrat gebildet oder nach Herstellung auf dem Substrat aufgetragen wird,
b) eine Filmbildung und/oder Vernetzung unter Ausbildung einer Schicht bei Temperaturen von 0°C bis 300°C, insbesondere bei Temperaturen von 50 bis 250 °C, erfolgt.

11. Verfahren nach Anspruch 10,
**dadurch gekennzeichnet, dass** die Filmbildung und/oder Vernetzung durch Anlegen eines Vakuums oder durch Erhitzen beschleunigt wird.

12. Verfahren nach einem der Ansprüche 10 oder 11,
**dadurch gekennzeichnet, dass** die Dispersion auf dem Substrat gebildet wird, indem zunächst das Bindemittel auf dem Substrat aufgebracht und anschließend das Sorbens in trockener oder befeuchteter Form geschüttet und anschließend getrocknet wird.

13. Verfahren nach einem der Ansprüche 10 bis 12,
**dadurch gekennzeichnet, dass** die Auftragung der Dispersion in Schritt b) mittels manueller Auftragung, Tauchbeschichtung, Sprühbeschichtung, Rotationsbeschichtung oder verschiedenen Rakelverfahren erfolgt.

14. Verfahren nach einem der Ansprüche 10 bis 13,
**dadurch gekennzeichnet, dass** die Beschichtung mit einer Schichtdicke im Bereich von 100 nm bis 10 mm, insbesondere von 100 µm bis 1 mm erzeugt wird.

15. Verfahren nach einem der Ansprüche 10 bis 14,
**dadurch gekennzeichnet, dass** das Substrat aus einem Metall oder einer Metalllegierung, insbesondere Aluminium und seinen Legierungen, Kupfer und seinen Legierungen oder rostfreiem Stahl einem Glas, einem Polymer, einer Keramik oder Kombinationen von diesen besteht oder diese im Wesentlichen enthält.

16. Beschichtete Wärmetauscherstruktur herstellbar nach einem der Ansprüche 10 bis 15.

17. Verwendung der Dispersion nach einem der Ansprüche 1 bis 9 zur Herstellung von
- Sorptionsschichten für Sorptionsprozesse mit Kältemitteln, insbesondere in Wärmepumpen, Kältemaschinen sowie zur Entfeuchtung und sorptionsgestützten Klimatisierung.
- Sorptionsschichten für Sorptionsprozesse zur thermischen Speicherung.
- Schutzschichten und Sterilschichten in der Medizintechnik,
- sensorisch oder katalytisch aktive Schichten, insbesondere für Gasphasen-Festbettreaktionen,
- Sorptionsschichten für die Gastrennung und Gasspeicherung.

## Claims

1. Dispersion comprising
- at least one porous sorbent selected from the group consisting of silica gels, zeolites and zeolite-like materials, aluminophosphates, silica aluminophosphates and metal aluminium phosphates, metal-organic frameworks (MOFs) and/or porous coordination polymers (PCPs), zeoliteimidazolate networks (ZiFs), molecular sieves (MCMs), activated carbons, carbon molecular sieves, hexacyanometallates and mixtures hereof,
wherein the at least one sorbent comprises mesopores with a diameter of 2 to 50 nm and is hence porous and has a BET surface of at least 300 m²/g
- at least one binder from the group of polyorganosiloxanes and
- at least one organic solvent.

2. Dispersion according to claim 1,
**characterised in that** the at least one sorbent has a BET surface of at least 300 to 5,000 m²/g.

3. Dispersion according to one of the preceding claims,
**characterised in that** the at least one sorbent is water-sensitive, in particular copper(II)-trimesate (HKUST-1) or zinc terephthalate (MOF-5).

4. Dispersion according to one of the preceding claims,
**characterised in that** the at least one sorbent is present as a powder, in particular with an average crystallite size of 50 nm to 20 µm and in particular with an average particle size of 200 nm to 200 µm.

5. Dispersion according to one of the preceding claims,
**characterised in that** the at least one binder is selected from the group consisting of aliphatic, olefinic and aromatic mono-, di- and triorganosiloxanes which are crosslinked via a crosslinker, in particular silanes, silicates, such as soda water glass or silicic acids.

6. Dispersion according to one of the preceding claims,
**characterised in that** the at least one solvent is selected from the group consisting of hydrocarbons, in particular aliphatic and aromatic hydrocarbons, preferably benzene and alkyl-substituted benzene derivatives, such as toluene, xylenes or ethylbenzene, or from the group consisting of aliphatic or aromatic alcohols, esters, ketones such as methanol, 2-methylpropan-1-ol or 2-methoxy-1-methylethylacetate, and also mixtures of the mentioned solvents.

7. Dispersion according to one of the preceding claims,
**characterised in that** in addition stabilisers, emulsifiers, low-molecular functional additives for improving the processibility, for example organic and inorganic rheological additives, in particular polyurethane resins or pyrogenic silicic acid, components increasing the heat conductivity, in particular graphite, expanded graphite, carbon fibres, carbon tubes, glass fibres, metallic nanoparticles and also mixtures hereof, are contained.

8. Dispersion according to one of the preceding claims,
**characterised in that** the suspension, relative to the dry mass without a proportion of solvent, has the following composition:
60% to 99% by weight, in particular of 80 to 95% by weight, of the sorbent,
1 to 40% by weight, in particular of 5 to 15% by weight, of the binder,
0 to 10% by weight of additives, selected from the group of stabilisers, emulsifiers, low-molecular functional additives for improving the processibility, and also mixtures hereof.

9. Dispersion according to one of the preceding claims,
**characterised in that** the suspension is stable over a time period of at least 2 hours, up to at least 48 hours.

10. Method for coating substrates, in particular a heat exchanger structure, in which
a) the dispersion according to one of the preceding claims is formed on the substrate or is applied on the substrate after production,
b) film formation and/or crosslinking with formation of a layer is effected at temperatures of 0°C to 300°C, in particular at temperatures of 50 to 250°C.

11. Method according to claim 10,
**characterised in that** the film formation and/or crosslinking is accelerated by applying a vacuum or by heating.

12. Method according to one of the claims 10 or 11,
**characterised in that** the dispersion is formed on the substrate by firstly the binder being applied on the substrate and subsequently the sorbent being scattered on in dry or moist form and subsequently being dried.

13. Method according to one of the claims 10 to 12,
**characterised in that** the application of the dispersion in step b) is effected by means of manual application, immersion coating, spray coating, rotational coating or various knife-coating methods.

14. Method according to one of the claims 10 to 13,
**characterised in that** the coating is produced with a layer thickness in the range of 100 nm to 10 mm, in particular of 100 µm to 1 mm.

15. Method according to one of the claims 10 to 14,
**characterised in that** the substrate consists of a metal or a metal alloy, in particular aluminium and the alloys thereof, copper and the alloys thereof or stainless steel, a glass, a polymer, a ceramic or combinations of these or essentially comprises these.

16. Coated heat exchanger structure producible according to one of the claims 10 to 15.

17. Use of the dispersion according to one of the claims 1 to 9 for the production of
- sorption layers for sorption processes with coolants, in particular in heat pumps, refrigeration machines and also for dehumidification and sorption-assisted air conditioning,
- sorption layers for sorption processes for thermal storage,
- protective layers and sterile layers in medical technology,
- sensory or catalytically active layers, in particular for gas phase solid bed reactions,
- sorption layers for gas separation and gas storage.

## Revendications

1. Dispersion, contenant
- au moins un sorbant poreux choisi dans le groupe consistant en les gels de silice, les zéolites et les matériaux zéolitiques, les aluminophosphates, les silicoaluminophosphates et les phosphates de métal et d'aluminium, les structures organométalliques (MOF) et/ou les polymères de coordination poreux (PCP), les réseaux zéolite-imidazolate (ZiF), les tamis moléculaires mésoporeux (MCM), les charbons actifs, les tamis moléculaires carbonés, les hexacyanométallates et les mélanges de ceux-ci, l'au moins un sorbant présentant des mésopores ayant un diamètre de 2 à 50 nm, et étant donc poreux et présentant une aire BET d'au moins 300 m²/g,
- au moins un liant du groupe des polyorganosiloxanes, et
- au moins un solvant organique.

2. Dispersion selon la revendication 1, **caractérisée en ce que** l'au moins un sorbant présente une aire BET de 300 à 5000 m²/g.

3. Dispersion selon l'une des revendications précédentes, **caractérisée en ce que** l'au moins un sorbant est sensible à l'eau, en particulier le trimésate de cuivre(II) (HKUST-1) ou le téréphtalate de zinc (MOF-5).

4. Dispersion selon l'une des revendications précédentes, **caractérisée en ce que** l'au moins un sorbant se présente sous forme de poudre, ayant de préférence une grosseur moyenne des cristallites de 50 nm à 20 µm, et en particulier une granulométrie moyenne de 200 nm à 200 µm.

5. Dispersion selon l'une des revendications précédentes, **caractérisée en ce que** l'au moins un liant est choisi dans le groupe consistant en les mono-, les di- et les triorganosiloxanes aliphatiques, oléfiniques et aromatiques, qui sont réticulés à l'aide d'un agent de réticulation, en particulier les silanes, les silicates tels que le silicate de soude ou les silices.

6. Dispersion selon l'une des revendications précédentes, **caractérisée en ce que** l'au moins un solvant est choisi dans le groupe consistant en les hydrocarbures, en particulier les hydrocarbures aliphatiques et aromatiques, de préférence le benzène et les dérivés du benzène à substitution alkyle, tels que le toluène, les xylènes ou l'éthylbenzène, ou dans le groupe consistant en les alcools, les esters, les cétones, aliphatiques ou aromatiques, tels que le méthanol, le 2-méthylpropan-1-ol ou l'acétate de 2-méthoxy-1-méthyléthyle, ainsi que les mélanges des solvants mentionnés.

7. Dispersion selon l'une des revendications précédentes, **caractérisée en ce qu'**elle contient en outre des stabilisants, des émulsifiants, des additifs fonctionnels à faible masse moléculaire destinés à améliorer l'aptitude à la mise en oeuvre, en particulier des additifs rhéologiques organiques et inorganiques, par exemple des résines de polyuréthanne ou des silices pyrogènes, des composants augmentant la conductivité thermique, en particulier le graphite, le graphite expansé, les fibres de carbone, les tubes de carbone, les fibres de verre, les nanoparticules métalliques et les mélanges de ceux-ci.

8. Dispersion selon l'une des revendications précédentes, **caractérisée en ce que** la suspension présente, par rapport à la masse sèche sans la partie solvant, la composition suivante :
60 % à 99 % en poids, en particulier de 80 à 95 % en poids, du sorbant,
1 à 40 % en poids, en particulier de 5 à 15 % en poids du liant,
0 à 10 % en poids d'additifs choisis dans le groupe des stabilisants, des émulsifiants, des additifs fonctionnels à faible masse moléculaire destinés à améliorer l'aptitude à la mise en oeuvre, ainsi que les mélanges de ceux-ci.

9. Dispersion selon l'une des revendications précédentes, **caractérisée en ce que** la suspension est stable sur une durée d'au moins 2 heures à au moins 48 heures.

10. Procédé pour le revêtement de substrats, en particulier d'une structure d'échangeur de chaleur, dans lequel
a) on forme sur le substrat la dispersion selon l'une des revendications précédentes, ou on l'applique sur le substrat après sa fabrication,
b) on procède à la formation d'un film et/ou à une réticulation, pour former une couche à des températures de 0 °C à 300 °C, en particulier à des températures de 50 à 250 °C.

11. Procédé selon la revendication 10, **caractérisé en ce que** la formation d'un film et/ou la réticulation sont accélérées par application d'un vide ou par chauffage.

12. Procédé selon l'une des revendications 10 ou 11, **caractérisé en ce qu'**on forme la dispersion sur le substrat en appliquant d'abord le liant sur le substrat, puis en versant en vrac le solvant sous forme sèche ou humidifiée, puis en le séchant.

13. Procédé selon l'une des revendications 10 à 12, **caractérisé en ce que** l'application de la dispersion dans l'étape b) s'effectue par application manuelle, application au trempé, application par pulvérisation, application à la tournette ou par différents procédés à la racle.

14. Procédé selon l'une des revendications 10 à 13, **caractérisé en ce que** le revêtement est réalisé avec une épaisseur de couche comprise dans la plage de 100 nm à 10 mm, en particulier de 100 µm à 1 mm.

15. Procédé selon l'une des revendications 10 à 14, **caractérisé en ce que** le substrat est constitué d'un métal ou d'un alliage métallique, en particulier d'aluminium et de ses alliages, de cuivre et de ses alliages ou d'acier inoxydable, d'un verre, d'un polymère, d'une céramique ou d'une combinaison de ceux-ci, ou pour l'essentiel les contient.

16. Structure d'échangeur de chaleur revêtue, pouvant être fabriquée selon l'une des revendications 10 à 15.

17. Utilisation de la dispersion selon l'une des revendications 1 à 9 pour la fabrication
- de couches de sorption pour des processus de sorption utilisant des agents frigorigènes, en particulier dans les pompes à chaleur, les machines frigorifiques, et aussi pour les déshumidifications et la climatisation assistée par sorption,
- de couches de sorption pour des processus de sorption destinées au stockage thermique,
- de couches de protection et de couches stériles en techniques médicales,
- de couches à activité sensorielle ou catalytique, en particulier pour des réactions en lit fixe en phase gazeuse,
- de couches de sorption pour la séparation des gaz et le stockage des gaz.
